# EUROPÄISCHE PATENTSCHRIFT

(11) **EP 0 602 448 B1**
(45) Veröffentlichungstag und Bekanntmachung des Hinweises auf die Patenterteilung: **17.02.1999**
(21) Anmeldenummer: 93119318.9
(22) Anmeldetag: 01.12.1993
(51) Int. Cl.: G06K 7/08, G06K 19/07

(54) **Ansteuerung für eine variable Last einer IC-Karte**
Control of a variable load of an IC card
Commande d'une charge variable d'une carte à puce

(30) Priorität: 15.12.1992 DE 4242112
(43) Veröffentlichungstag der Anmeldung: 22.06.1994
(73) Patentinhaber: TEMIC Semiconductor GmbH, 74072 Heilbronn (DE)
(72) Erfinder: Bruhnke, Michael, D-80798 München (DE); Klötzig, Gerold, D-84174 Eching (DE); Klosa, Klaus, D-80337 München (DE); Smith, Stuart, D-81667 München (DE)
(74) Vertreter: Maute, Hans-Jürgen, Dipl.-Ing.

(56) Entgegenhaltungen:
- EP-A- 0 583 690
- WO-A-89/07295
- DE-A- 4 104 274

## Beschreibung

Die Erfindung betrifft eine kontakt- und batterielose Chip-Karte nach dem Oberbegriff des Anspruchs 1. Insbesondere betrifft die Erfindung eine Ansteuerung für eine variable Last zur Modulation einer Trägerfrequenzamplitude.

Kontakt- und batterielose Chip-Karten sind z.B. aus Winfried Wigand, "Die Karte mit dem Chip", Siemens Nixdorf Informationssysteme AG, Berlin und München, 1991, S. 34-36 bekannt. Die Energieversorgung erfolgt durch transformatorische Kopplung über ein Wechselfeld, mit einem Schreib-Lese-Gerät. Das Wechselfeld wird von dem Schreib-Lese-Gerät erzeugt. Die Datenübertragung von und zu der Chip-Karte erfolgt durch Modulation des Wechselfelds. Ein geeignetes Verfahren ist in der DE 41 07 311 A1 beschreiben. Auf der Chip-Karte wird die Modulation des Wechselfelds beim lesenden Zugriff von einer geschalteten Last bewirkt, die die Antennenspule bedämpft. Als Modulationsart wird eine Amplitudenmodulation verwendet, die mit anderen Modulationsarten kombiniert werden kann.

Beim Senden wechseln Phasen mit eingeschalteter Last und Phasen mit abgeschalteter Last einander ab. Da aus der Spulenenergie die Versorgungsspannung der Chip-Karte gewonnen wird, steigt bei ausgeschalteter Last die interne Versorgungsspannung an. Es baut sich in der Chip-Karte eine hohe Versorgungsspannung auf. Bei eingeschalteter Last dagegen sinkt die Versorgungsspannung auf einen minimalen Wert ab.

Aus der DE-A 41 04 274 ist eine Chip-Karte bekannt, bei der zum Bedämpfen der Antennenspule beim Sendebetrieb eine parallel zur Antennenspule angeordnete Reihenschaltung aus einer variablen Last und einem Schalttransistor durch ein dem Schalttransistor zugeführten Modulationssignal angesteuert und dadurch niederohmig wird. Die Last ist als MOS Feldeffektransistor ausgeführt, der über den Ausgang eines Differenzverstärkers angesteuert wird, wobei die Größe der Last abhängt von der Ausgangsspannung des Differenzverstärkers. Der Substratanschluß dieses Feldeffektransistors liegt auf seinem Sourcepotential. Der Sourceanschluss ist mit der Schaltstrecke des Schalttransistors verbunden. Der Differenzverstärker vergleicht die Klemmenspannung der Antennenspule mit einer Referenzspannung, und steuert als Ergebnis die variable Last so an, daß die Versorgungsspannung der Chip-Karte bei leitend geschaltetem Schalttransistor einen Mindestwert nicht unterschreitet.

Da die Größe der Last unter anderem auch von der Versorgungsspannung abhängt, ist die Last zum Zeitpunkt des Einschaltens zunächst sehr niederohmig. Als Folge davon bricht die Versorgungsspannung kurzzeitig zusammen. Es entstehen hohe Stromspitzen, die zu Störungen im Empfangsteil des Schreib-Lese-Geräts führen, die ihrerseits den Datentransfer beeinträchtigen können. Weiterhin bewirken kurzzeitige Einbrüche in der Versorgungsspannung Störungen bei der Takterzeugung auf der Chip-Karte. Je nach Ausführung der Takterzeugungsschaltung können zusätzliche Taktimpulse entstehen oder es werden Takte ausgelassen. Beides führt zu falscher Modulation und folglich zu einer fehlerhafter Datenübertragung.

Aufgabe der Erfindung ist es daher eine Chip-Karte anzugeben, bei der die Ansteuerung der Last zur Modulation des Wechselfeldes derart erfolgt, daß der Datentransfer weitgehend störungsfrei erfolgt.

Diese Aufgabe wird durch eine Chip-Karte mit den Merkmalen des Anspruchs 1 gelöst. Die vorteilhafte Ausgestaltung der Erfindung erfolgt gemäß den Merkmalen des abhängigen Anspruchs.

Eine kontakt- und batterielose Chip-Karte, wie sie der Erfindung zugrunde liegt, wird durch ein von einem externen Schreib-Lese-Gerät erzeugten Wechselfeld mit Energie versorgt. Die Datenübertragung von und zur Chip-Karte erfolgt durch Modulation des energieübertragenden Wechselfelds. Auf Seite der Chip-Karte erfolgt das Senden von Daten durch ein Bedämpfen der Antennenspule 2 mit einer variablen Last 4. Erfindungsgemäß ist vorgesehen, die variable Last über einen Pegelwandler 5 anzusteuern. Dadurch wird erreicht, daß die Stärke der variablen Last 4 unabhängig von der internen Versorgungsspannung VDD-VSS der Chip-Karte ist und nur noch von der induzierten Spulenenergie abhängt. Stromspitzen beim Einschalten der Last 4 und Fehler in der Takterzeugung treten dann nicht mehr auf.

Gemäß einer vorteilhaften Weiterbildung der Erfindung erfolgt die Spannungsversorgung der Chip-Karte gepuffert oder geregelt. Idealerweise durch eine Kombination beider Maßnahmen. Dadurch ist ein stabiler Betrieb der Chip-Karte auch bei Schwankungen der Spulenenergie möglich. Derartige Schwankungen werden hauptsächlich von Änderungen im Abstand zwischen der Chip-Karte und dem Schreib-Lese-Gerät hervorgerufen.

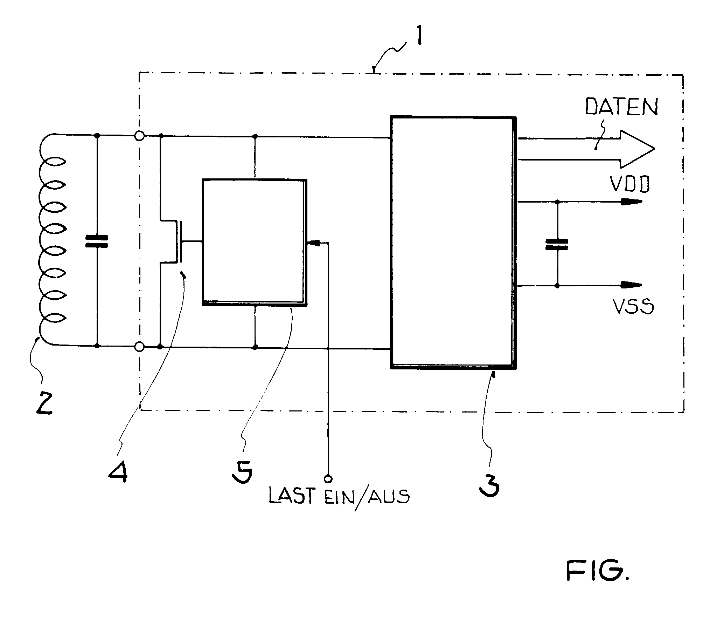

Im folgenden ist ein Ausführungsbeispiel der Erfindung anhand der Figur erläutert. Die Figur zeigt den schematischen Aufbau des Sende- und Empfangsteils einer Chip-Karte nach der Erfindung.

Dem Chip-Karten Schaltkreis 1 werden Energie und Daten durch transformatorische Kopplung mit einem nicht dargestellten Schreib-Lese-Gerät über ein von diesem erzeugten Wechselfeld zugeführt. Zum Empfang der Energie und der Daten weist die Chip-Karte eine Antennenspule 2 auf. Sie ist im Allgemeinen aus Platzgründen nicht in das eigentliche Halbleiterchip 1 der Karte integriert, sondern vielmehr im Kartenkörper angeordnet. Die Antennenspule 2 ist mit der Eingangsschaltung 3 des Chip-Karten ICs 1 verbunden. Die Eingangsschaltung 3 gewinnt aus dem Strom der Antennenspule 2 die Versorgungsspannung VDD-VSS für die Chip-Karte. Weiterhin werden in der Eingangsschaltung die über das Wechselfeld übertragenen Daten für die Weiterverarbeitung aufbereitet. Die weiteren Schaltungsteile des Chip-Karten ICs, wie zum Beispiel EEPROM Speicher, Speicher- und Datenverwaltung, Ausleseschaltungen usw., sind in der Figur der Übersichtlichkeit halber nicht dargestellt.

Das Senden der Daten von der Chip-Karte zum Schreib-Lese-Gerät erfolgt durch Modulation des Wechselfelds durch entsprechendes Bedämpfen der Antennenspule 1. Eine Last 4, die je nach Ansteuersignal zugeschaltet werden kann, verbindet in geschlossenen Zustand die beiden Anschlüsse der Antennenspule 1. Die Schaltstrecke der Last 4 wird im Takt eines modulierten Datenstroms geschlossen und bewirkt somit eine Änderung der Eigenschaften der Übertragungsstrecke zwischen Chip-Karte und Schreib-Lese-Gerät. Diese werden im Schreib-Lese-Gerät als Datenstrom empfangen. ErfindungsgemäB wird die Last 4 nicht direkt vom Datenstrom angesteuert. Es hat sich vielmehr als Vorteilhaft erwiesen, wenn die Ansteuerung über einen Pegelwandler 5 erfolgt, der dafür sorgt, daß die Last 4 durch ein Potential angesteuert wird, das dem augenblicklich an der Antennenspule 2 anliegendem Potential entspricht. Sinkt beim Einschalten der Last dieses Potential ab, so wird gleichzeitig die Last weniger stark angesteuert.

Somit treten beim Einschalten der Last keine hohen Stromspitzen auf, die über die Last 4 den Datentransfer stören. Dadurch wird eine verbesserte Datenübertragung von der Chip-Karte zum Schreib-Lese-Gerät erreicht. Gleichzeitig ist die Versorgungsspannung VDD-VSS im Sendebetrieb der Chip-Karte stabiler.

Es ist zur weiteren Verbesserung der internen Versorgungsspannung VDD-VSS der Chip-Karte vorgesehen, die aus der Antennenspule 2 abgeleitete Spannung zu puffern und/oder zu regeln. Dazu sind in der Eingangsschaltung 3 entsprechende Schaltungsteile vorgesehen. Die so erhaltene gepufferte oder geregelte Schaltung wird der Chip-Karte als Versorgungsspannung VDD-VSS zugeführt. Zusammen mit der Ansteuerung der Last 4 über den Pegelwandler wird der Betrieb der Chip-Karte insbesondere während der Übertragung von Daten von der Chip-Karte zum Schreib-Lese-Gerät deutlich weniger anfällig für Störungen. Als weitere Folge davon kann der Datendurchsatz vorteilhaft erhöht werden.

## Patentansprüche

1. Kontakt- und batterielose Chip-Karte, die von einem Schreib-Lese-Gerät über ein Wechselfeld mit Energie versorgt wird, wobei der bidirektionale Datentransfer durch Modulation des energieübertragenden Wechselfeldes erfolgt, mit einer Antennenspule (2), einer Eingangsschaltung (3), die aus dem Spulenstrom die Versorgungsspannung (VDD-VSS) generiert und einer variablen Last (4), deren Größe in Abhängigkeit eines ihr zugeführten Spannungspegels einstellbar ist, zum Bedämpfen der Antennenspule im Sendebetrieb, dadurch gekennzeichnet, daß die variable Last (4) über einen Pegelwandler (5) angesteuert wird, der ein auf die Versorgungsspannung (VDD-VSS) bezogenes Schaltsignal auf den Spannungspegel der Antennenspule (2) umsetzt.

2. Kontakt- und batterielose Chip-Karte nach Anspruch 1, dadurch gekennzeichnet, daß die Versorgungsspannung (VDD-VSS) der Chip-Karte gepuffert oder geregelt ist.

## Claims

1. A contact- and battery-free chip card supplied with power by a write-read device via an alternating field, wherein the bidirectional data transfer is effected by modulation of the power-transmitting alternating field, comprising an antenna coil (2), an input circuit (3) which generates the supply voltage (VDD-VSS) from the coil current, and a variable load (4) whose magnitude is adjustable as a function of a voltage level supplied to said load, for damping the antenna coil in transmitting operation, characterised in that the variable load (4) is controlled via a level converter (5) which converts a switching signal relating to the supply voltage (VDD-VSS) to the voltage level of the antenna coil (2).

2. A contact- and battery-free chip card according to Claim 1, characterised in that the supply voltage (VDD-VSS) of the chip card is buffered or regulated.

## Revendications

1. Carte à puce sans contact et sans batterie, qui est alimentée en énergie, par l'intermédiaire d'un champ alternatif, par un appareil d'écriture-lecture, le transfert bidirectionnel de données s'effectuant par modulation du champ alternatif de transmission d'énergie, équipée d'une bobine d'antenne (2), d'un circuit d'entrée (3), qui génère à partir du courant de bobine la tension d'alimentation (VDD-VSS) et une charge variable (4), dont la grandeur peut être régulée en fonction d'un niveau de tension appliqué à celle-ci, en vue de l'amortissement de la bobine d'antenne en mode émission, caractérisé en ce que la charge variable (4) est commandée par l'intermédiaire d'un convertisseur de niveau (5), qui convertit un signal de commutation rapporté à la tension d'alimentation (VDD-VSS) en niveau de tension de la bobine d'antenne (2).

2. Carte à puce sans contact et sans batterie selon la revendication 1, caractérisée en ce que la tension d'alimentation (VDD-VSS) de la carte à puce est égalisée ou régulée.
